## Europäisches Patentamt
## European Patent Office
## Office européen des brevets

(11) Publication number: **0 022 367 B1**

(12) **EUROPEAN PATENT SPECIFICATION**

(45) Date of publication of patent specification: **30.11.83**

(51) Int. Cl.³: **C 04 B 1/06, B 01 D 53/34**

(21) Application number: **80302285.4**

(22) Date of filing: **04.07.80**

(54) **Process for the preparation of an agent for neutralizing acidic components of flue gas.**

(30) Priority: **05.07.79 DK 2854/79**

(43) Date of publication of application:
**14.01.81 Bulletin 81/2**

(45) Publication of the grant of the patent:
**30.11.83 Bulletin 83/48**

(84) Designated Contracting States:
**AT BE CH DE FR IT LI NL SE**

(56) References cited:
**FR - A - 2 407 016**

(73) Proprietor: **A/S NIRO ATOMIZER**
**No. 305 Gladsaxevej**
**DK-2860 Soeborg (DK)**

(72) Inventor: **Felsvang, Karsten Stig**
**14 Sortemosen**
**DK-3450 Allerod (DK)**
Inventor: **Hansen, Ove Emil**
**261 Skovgarde Alle**
**DK-3500, LI. Vaerlose (DK)**

(74) Representative: **Pennant, Pyers et al,**
**Stevens, Hewlett & Perkins 5 Quality Court**
**Chancery Lane**
**London, WC2A 1HZ (GB)**

Courier Press, Leamington Spa, England.

## Process for the preparation of an agent for neutralizing acidic components of flue gas

Flue gas often contains acidic components such as sulfur dioxide in the case of flue gas originating from the combustion of sulfur-containing fuel, or hydrogen chloride in the case of flue gas resulting from the incineration of waste including chlorine-containing plastics.

As is generally recognized, it is desirable to reduce the content of such acidic components in flue gas prior to its discharge into the atmosphere. Many different methods to this effect have therefore been proposed, most of which fall within one of the following three main groups:

(a) Scrubbing of the gas with an aqueous basic medium under such conditions that only a minor part of the water present in the medium evaporates, this scrubbing being possibly combined with a regeneration of the basic medium. These methods suffer in particular from the defect that they result in an aqueous slurry which may be difficult to dispose of, and furthermore, they cause a substantial cooling and moistening of the flue gases, so that much energy is required to reheat these prior to their discharge through the stack.

(b) Methods according to which an aqueous basic solution or suspension is sprayed into the flue gas under such conditions that the basic solution or suspension is spray-dried to a powder, while at the same time it reacts with the acidic components of the flue gas and thereby binds them. In contrast to the methods mentioned under (a), the undesirable components are bound in a dry powder which usually is easily deposited. Methods of this type are described e.g. in the GB—A—1 333 635 (corresponding to DE—C—2 159 186), in the US—A—3 932 587 and 3 969 482 and in the DK—A—4830/77 and 2237/78. By methods of this type it is possible to obtain a satisfactory conversion of the basic materials, with formation of e.g. chlorides, sulfites and/or sulfates, and it has been assumed that the reaction between the basic materials and the acidic components of the flue gas takes place mainly while the atomized particles are still containing substantial amounts of water. A drawback of processes of this type is that they require a rather extensive apparatus and result in a cooling of the flue gas and an increase in its moisture content, although these two last-mentioned drawbacks manifest themselves to a far less extent than in the methods mentioned under (a).

(c) Methods according to which the flue gas is brought into contact with substantially dry absorbent materials.

Methods of this type present certain advantages as compared to the above-mentioned methods (a) and (b), as the apparatus required for performing them are less space and investment consuming, and for this reason they will often be particularly suitable in connection with existing power plants or refuse incinerators, where the space available for the installation of a gas purifying plant may be limited.

The purifying methods of this type suffer, however, from the serious drawback that, generally, the reaction efficiency of the absorbent material is very low, and this makes it necessary to use a substantially larger amount of absorbent than in the methods (a) and (b), when an extensive removal of the acidic components of the flue gas is required.

The methods of type (c) have therefore been suggested in particular as an after-treatment of gases previously freed of the main part of the acidic components, cooled and humidified (see US—A—3 969 482), or the basic absorbents have been introduced into the combustion chamber itself, in order to increase the reaction efficiency. This latter measure gives, however, problems due to deposits in the flues. A method of this latter type is disclosed in US—A—3 851 042. According to said method, freshly hydrated lime (slaked under such conditions that a substantially dry product is obtained) is injected into the combustion zone of a boiler in an area where the flue gas has a temperature between 650 and 1300°C. A satisfactory utilization of the lime should thereby be achieved, but it is pointed out in the patent specification that it is necessary that the lime be absolutely freshly hydrated, so that it has to be fed directly from the hydration chamber to the combustion zone, and that the injection should take place into a region where the flue gas has the said high temperature, as the hydrated lime is to be dehydrated into CaO prior to the reaction with the acidic components of the flue gas.

In a process as the one dealt with in the last-mentioned patent specification, it would be desirable, for one thing to be able to remove the introduction of lime to a place where the flue gas has left the boiler itself and other possibly connected heat-exchanger units, on account of the risk of deposits in flues, and for another thing, to be able to avoid slaking lime immediately before its introduction, as this results in inflexible operative conditions and complicates to a high extent the operation of a power plant or a refuse incinerator.

There is therefore a demand for a solid powdered absorbent having so high a reactivity that the absorption process can be carried out achieving an effective absorption of HCl, $SO_2$ and other acidic components of flue gas with a moderate consumption of absorbent, and this also at the ordinary temperature of the gas after it has left the boiler and a possible heat exchanger, said absorbent being active without any substantial previous or simultaneous humidifying of the flue gas.

As the absorbent in question is to be used in very large quantities, it goes without saying that only comparatively easily accessible and cheap materials may be considered for that purpose.

As calcium hydroxide in the form of slaked lime, also designated as hydrated lime, is a relatively cheap basic material, it has of course been proposed as an absorbent for the purpose in question, see e.g. DE—A1—2,638,581, but it has, so far, not been possible to achieve a satisfactory reaction of the slaked lime under the above-mentioned desirable reaction conditions.

Said hydrated lime used in the prior processes is prepared by performing a reaction between calcium oxide and water in approximately stoichiometric proportions or with only a slight excess of water whereby a so-called dry slaking takes place resulting in a dry powdered calcium hydroxide.

It has now been found that by modifying the mode of preparation (as defined above) of the hydrated lime, it is possible to obtain a material which to a much greater extent than the ordinary hydrated lime prepared by dry slaking, is able to react with the acidic components of the flue gas under said desirable conditions.

Accordingly, the invention relates to a process for the preparation of an agent for neutralizing acidic components in flue gas, said agent consisting essentially of hydrated lime or hydrated dolomitic lime which process is characterized in that quicklime or dolomitic quicklime is slaked in a conventional manner with an excess of water to produce a suspension of particles of hydrated lime in water, which suspension is dried into a powder dispersible in a gas stream and having a moisture content between 0 and 50% by weight.

The slaked lime powder produced by the process according to the invention has a smaller particle size and therefore a greater surface per unit of weight than hydrated lime prepared by dry slaking. The greater affinity of the powder prepared according to the process of the invention as compared to that of ordinary dry-slaked lime cannot, however, be explained exclusively by this difference in specific surface area, and therefore it can be concluded that the powder according to the process of the invention possesses a greater surface activity and/or a more active structure than the powder produced by dry slaking. It is observed that the enhanced activity is not only obtained with freshly produced powder but is to be found substantially unreduced in powder which has been stored for months.

As mentioned above, the quicklime used as starting material may possibly be of the dolomitic type, that is to say that it may contain magnesium compounds. In the following, the expressions lime and calcium hydroxide as used are including also magnesium-containing materials.

The hydrated lime is preferably dried to a moisture content of about 15% by weight. At this moisture content the lime is in the form of a free-flowing powder which is easily suspended in the flue gas to be cleaned. As a relatively high moisture content increases the reactivity of the powder, and since the removal of the last moisture renders the drying process more expensive, the powder will usually not be dried to remove all moisture. The highest permissible moisture content in the powder is determined by the fact that the powder must be dispersible in the gas to be purified and, as mentioned above, the maximum moisture content is 50%, as a powder having a higher moisture content is difficult to disperse in the flue gas.

In the process of the invention, the slaking is preferably carried out with a weight ratio of quick lime to water between 1:2 and 1:5, and the slaking temperature lies preferably between 80 and 97°C.

Under these conditions, a highly viscous mass is obtained, said mass being constituted of particularly small and, as it has been found, particularly reactive calcium hydroxide particles in water.

With a view to preventing the finished product from containing coarser particles hardly dispersible in flue gas, it is preferable to sieve the produced suspension or to pass it through a grinding mill prior to the drying, in order to remove the coarse particles. This removes the gravel and pebbles which are usually introduced together with the quick lime.

The drying of the calcium hydroxide suspension produced by slaking may take place in several manners but it is preferable to carry out the drying as spray drying, as such an operation proceeds smoothly and has proved in practice to give a higly active product. However, other drying methods, such as for instance flash-drying, also comes into consideration.

It has been found that a particularly active absorbent is obtained by drying a suspension of calcium hydroxide prepared by slaking of quick lime in fluidized bed.

It is a particular advantage of the invention that such an agent can be prepared on a large scale in a single plant which, for instance can be situated in an area where quarrying and burning of limestone take place, whereafter the agent, possibly after having been stored, can be dispatched to the flue gas producing plants where it is to be used, so that it is not necessary to carry out space-, investment- and labour-consuming slaking and spray drying processes in each of these plants.

A special advantage achieved by performing the spray drying in connection with the plant where the burning of limestone takes place is that a suitable hot drying gas is available there, viz. the exit gas from the limestone burning kilns, said exit gases having a heat content which can be difficult to use effectively in another way.

It is, moreover, observed that spray drying according to the invention can be performed with a substantially better thermal economy than the spray drying taking place in connection with the purifying methods mentioned under (b) above, as the drying step in the process according to the invention can be performed using a substantially greater difference between inlet and exit temperature of the drying air than in the said methods where the flue gas to be purified is used as drying gas. For the same reason, a spray drying plant can be dimensioned with a substantially smaller drying chamber, when it is to be used for the preparation of the agent according to the invention in an amount sufficient for treating a given amount of flue gas, than if the spray drying plant were to be used for the treatment of the same amount of flue gas according to a process of the type (b). This means that the process of the invention is also advantageous in the case of the preparation of the agent in question taking place at the site of the flue gas producing plant itself.

Finally, the invention relates to a process for neutralizing acidic components of flue gas, which process is characterized in that the separately produced agent in question is dispersed in the gas and is again separated therefrom.

According to a preferred embodiment of this process the agent is injected into a stream of flue gas which thereafter is led to a turbulent-flow reactor dimensioned so that the average residence time for the flue gas and the agent is 1—10 seconds, the purified gas and the agent reacted with the acidic components being removed from said reactor, whereafter the flue gas and entrained particles of the reacted agent are led to a collector unit wherein the particles are collected and from which the substantially neutralized flue gas is led to the stack. This process affords particularly good conditions for an adequate contact between flue gas and neutralizer, which results in an optimum utilization of the latter.

Said reactor small preferably be of a type which enables a long and uniform residence time for the particles and in which mutually different velocities exist for the particles and the gas, as is the case when the flow has a very turbulent character. These conditions are fulfilled by several known apparatus of simple design, e.g. such as described in SU—A—485 294, GB—A—908 080 and 981 750, DE—A1—2 432 627 (corresponding to GB—A—1 521 746) and DE—A1—2 839 541.

In a preferred embodiment of the process use is made of a bag filter as a collector unit. Over the other collector units such as electro-filters or cyclones, the bag filter has the advantage of allowing the separated neutralizer to remain in contact with the flue gas stream as long as it remains on the filtering surface, which makes possible a further utilization of the neutralization capacity of the agent.

In order to obtain the maximum utilization of the agent according to the invention, it may be convenient to disperse again part of the particles from the collector unit into a stream of flue gas together with not previously used agent.

The reactivity of the agent in question is so high that the temperature of the gas at the time when it is treated with the agent is not critical. The process for neutralizing the acidic components of flue gas can therefore be carried out at temperatures above 1000°C, but it is of special interest that, contrary to, e.g. the process of the above-mentioned US—A—3 851 042, it can be carried out at relatively low temperatures. This means that also in plants where an effective utilization of the heat content of flue gas takes place, so that the flue gas is led to the stack in a relatively cold condition, the absorption process can be carried out after the flue gas has been passed through all the heat exchanging steps, whereby the risk of deposits of absorbent in the heat exchange units is eliminated. Accordingly, a preferred embodiment of the process is characterized in that the flue gas which is treated has a temperature below 350°C. In general, a better reaction between the acidic components and the agent is achieved at a comparatively low temperature than at a comparatively high one. The factors determining the minimum temperature of the flue gas are the moisture content and the nature of the acidic components. When the flue gas is rich in HCl the temperature should usually not be lower than 100°C. At lower temperatures, on account of the hydroscopicity of calcium chloride, a material which is not free-flowing and therefore will be difficult to remove from the collector unit is produced. The compounds formed when removing $SO_2$ ($CaSO_3$ and $CaSO_4$), on the contrary, do not possess a similar hydroscopicity and therefore when it is mainly $SO_2$ which is to be removed, the process can be carried out on flue gas at temperatures substantially below 100°C.

The treatment per se results only in a very slight decrease in the flue gas temperature and in a very slight increase in its moisture content.

The invention is further illustrated in the following with reference to the drawing where

Fig. 1 is a schematic illustration of an embodiment of the process for the preparation of the agent according to the invention and

Fig. 2 a schematic illustration of an embodiment of the process for neutralizing acidic components of flue gas according to the invention, using the agent.

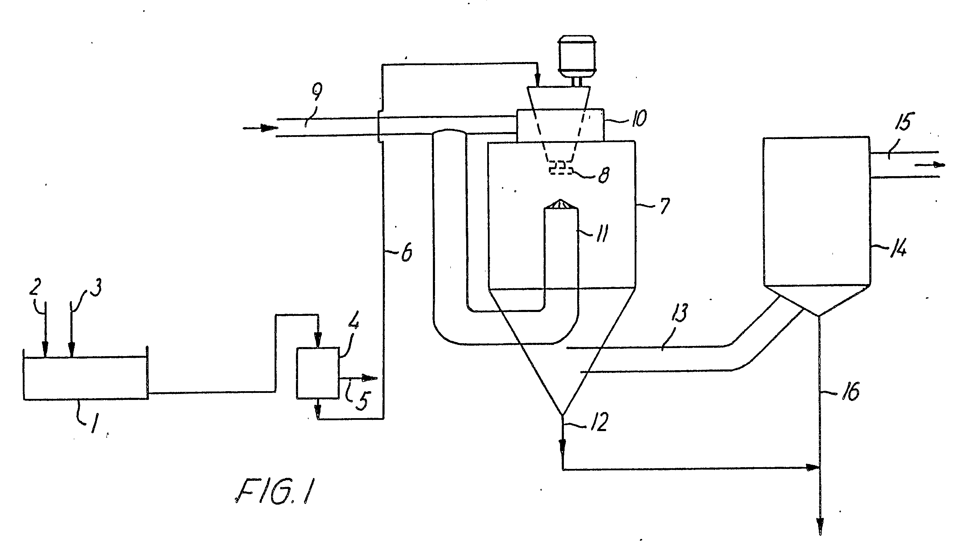

Fig. 1 shows a slaking vessel 1 having an inlet for quicklime and a water inlet 3. From this vessel the produced calcium hydroxide suspension having a solids content of about 25% is led to a sieve unit 4 wherefrom sieved-off particles are removed through a pipe 5 and the sieved suspension is led through a pipe 6 to a spray drying plant 7.

In the spray drying plant 7 the suspension is atomized by means of a rotary atomizer wheel 8 which is suitably of a wear-resistant type. Hot drying air is supplied to the spray drying plant through a duct 9 connected to a roof air dispenser 10 and/or to a central air dispenser 11.

Each of the droplets of suspension formed by the atomization contains a number of small calcium hydroxide particles. By the drying of the individual droplets, particles composed of many small primary particles may therefore possibly be formed, but the adhesive force between these primary particles is so low that the composite particles formed by the spray drying to a large extent are split into the individual primary particles during the handling and utilization of the resulting powder.

Part of the powder produced by spray drying is collected centrally in the conical bottom of the spray drier, wherefrom it is removed through a powder outlet 12. The remaining portion of the powder produced is entrained by the drying air leaving through a duct 13 to a collector unit 14, which may be an electrostatic precipitator, a cyclone or a bag filter. From this collector unit the particle-free drying air leaves through a duct 15, while the separated particles are removed through the powder outlet 16 and are suitably combined with the material removed through the powder outlet 12 of the spray drying plant.

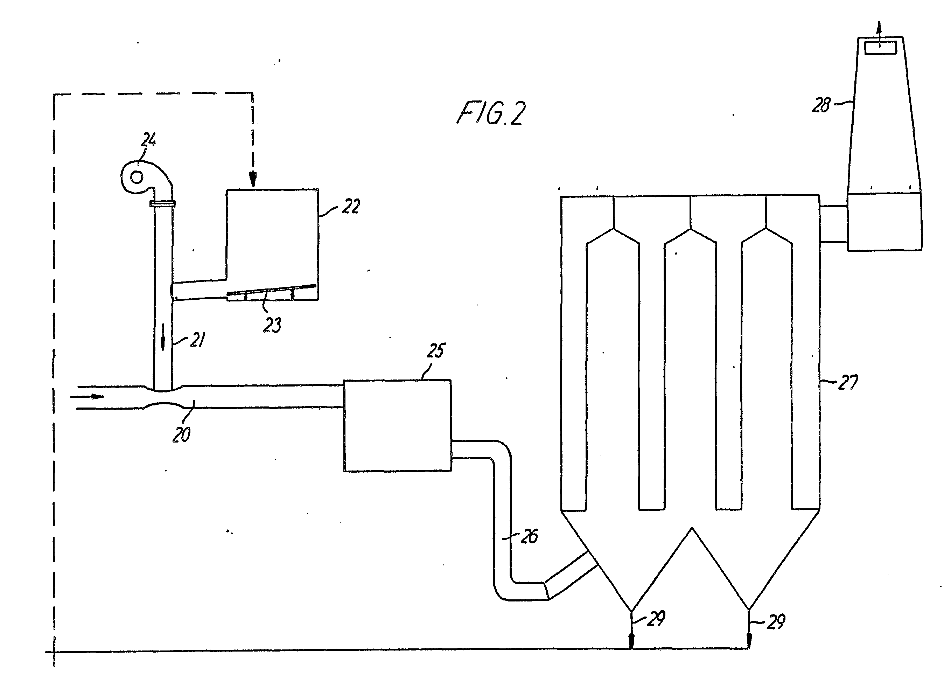

The calcium hydroxide powder thus obtained is suitable for use in a process as outlined in Fig. 2.

Fig. 2 shows a duct 20 through which flue gas having a undesirable content of acidic components such as HCl and $SO_2$ is flowing. The duct is provided with a Venturi throat at which particles of the agent according to the invention are injected into the duct through a transverse pipe 21 by means of a secondary air stream. The agent is supplied from a reservoir 22 from which, in the embodiment shown, it is introduced by means of a vibrating dosing device 23 into the stream of secondary air produced by means of a blower 24.

The agent is thereby dispersed in the flue gas and together with said gas is led via the duct 20 to a reactor 25. Said reactor may be of of any conventional type, provided that it is designed so as to provide maximum contact between the gas and the supplied particles. For instance, the reactor may be constituted of a vessel provided with baffle plates to provide turbulent-flow conditions, which vessel is preferably dimensioned so as to allow a residence time for the flue gas and the particles of the agent present therein of 1—10 seconds.

The flue gas and the entrained particles of the agent are led from the reactor 25 through a duct 26 to a bag filter unit 27 of conventional design.

From the unit 27 the purified flue gas is led to a stack 28, while the reacted agent is removed through the powder outlets 29.

The reacted agent removed through the powder outlets 29 is a free-flowing powder the chemical composition of which depends on the original components of the flue gas. Besides unreacted calcium hydroxide, it may in typical cases contain calcium chloride, calcium sulfite and calcium carbonate and possibly the corresponding magnesium compounds. The fact that the reacted agent is a free-flowing powder facilitates its transport and disposal.

Part of the material removed from the powder outlets 29 may, in order to achieve a better utilization of the lime, be·recycled to the reservoir 22, as indicated by the dotted line in Fig. 2.

The invention will in the following be further illustrated by means of examples, where the expression "stoichiometric ratio" is, as above, used as a synonym of "equivalent ratio".

Example 1
Preparation of the absorbent

A plant as outlined in Fig. 1 was used. Water and ground quicklime were supplied to the slaking vessel 1 in a ratio by weight of 4:1. The average residence time in the slaking vessel was 20 minutes. The suspension thus obtained having a solids content of about 25% by weight was then sieved for removing gravel and lumps. The sieved suspension was spray dried using an inlet temperature of the drying air of about 400°C and an exit temperature of 100°C. The powder thus produced had a moisture content of 15% by weight.

Use of the absorbent

A plant as outlined in Fig. 2 was used. The cylindrical part of the reactor 25 had a diameter of 2.2 m and its height was about 1 m. The reactor had a conical bottom with a cone angle of 60°. These dimensions corresponded to an average residence time for the flue gas in the reactor of about 8 seconds. The flue gas the acidic components of which were to be neutralized had a temperature of about 150°C and a fly ash content of 5 g/Nm³, and the HCl concentration was 1300 mg/Nm³.

The flue gas was supplied through the duct 20 in a quantity of 1900 kg/hour.

The agent according to the invention, prepared as described above, was dosed in a quantity corresponding to a stoichiometric ratio between HCl and $Ca(OH)_2$ of 1.3. A removal of 70% of the HCl present in the flue gas was thereby obtained.

The test was repeated with the difference that the quantity of absorbent was increased so that the said stoichiometric ratio was 3.5. Under these conditions, a removal of 95% of HCl from the flue gas was achieved.

Comparative Example 1
Flue gas having the same composition as in Example 1 was treated as in said Example, but using commercially available hydrated lime, i.e. calcium hydroxide prepared by dry slaking, instead of the agent according to the invention.

In this case, far greater amounts of absorbent were required in order to achieve removal of the same amount of HCl. Thus, for achieving a HCl removal of 70%, a stoichiometric ratio of $Ca(OH)_2$ to HCl of 7.8 was necessary, and for achieving an absorption of 95% of the HCl amount, this ratio had to be 22.5. Thus in the latter case, the amount of calcium hydroxide had to be more than six times the amount necessary in the process of the invention.

Example 2

This test was carried out using an absorbent prepared as described in the first part of Example 1.

The flue gas to be purified was supplied in a stream of 1900 kg/hour and had an $SO_2$ content of 1500 mg/Nm³. The temperature of the flue gas was 150°C.

The neutralization was carried out using the same plant as described in Example 1. The following results were thereby obtained:

An adsorption of 70% of the $SO_2$ required a stoichiometric ratio of calcium hydroxide to $SO_2$ of 3.8, while an absorption of 95% of the $SO_2$ required a corresponding stoichiometric ratio of 11.5.

Comparative Example 2

This comparative test was carried out as described in Example 2, but with the difference that use was made of commercially available hydrated lime instead of the agent prepared according to the invention. In this case the following results were obtained:

An absorption of 70% of the $SO_2$ required a stoichiometric ratio of calcium hydroxide to $SO_2$ of 15.1, and it was not possible at all to obtain an $SO_2$ absorption of 95%.

Claims

1. A process for the preparation of a neutralizing agent for acidic components in flue gas, said agent consisting essentially of hydrated lime or hydrated dolomitic lime, characterized in that quicklime or dolomitic quicklime is slaked in a manner known per se with an excess of water to produce a suspension of particles of hydrated lime in water, which suspension is dried into a powder dispersible in a gas stream and having a moisture content between 0 and 50% by weight.

2. A process according to claim 1, characterized in that the slaking is carried out with a weight ratio of quicklime to water between 1:2 and 1:5.

3. A process according to claim 1, characterized in that the slaking is performed at a temperature between 80 and 97°C.

4. A process according to claim 2, characterized in that the suspension formed by the slaking is passed through a sieve or a grinding mill to remove coarse particles.

5. A process according to claim 1, characterized in that the drying is performed as a spray drying.

6. A process according to claim 5, characterized in that the exhaust gas from a limestone burning furnace is used as drying gas in the spray drying.

7. A process according to claim 1, characterized in that quicklime burnt in fluidized bed is used as starting material.

8. A method of neutralizing acidic components of flue gas, characterized in that an agent prepared by a process according to any one of claims 1 to 7 which has been produced in a separate step, is dispersed in the gas and is afterwards separated therefrom.

9. A method according to claim 8, characterized in that the agent is injected into a stream of flue gas, which is thereafter led to a turbulent-flow reactor dimensioned to obtain an average residence time for the flue gas and the agent of 1—10 seconds, from which reactor the cleaned gas and the agent reacted with the acidic components are removed, whereafter the flue gas and entrained particles of the reacted agent are led to a collector unit wherein said particles are collected and from which the substantially neutralized flue gas is led to a stack.

10. A method according to claim 9, characterized in that a bag filter is used as collector unit.

11. A method according to claim 9, characterized in that a part of the particles which are collected in the collector unit is redispersed in a stream of flue gas together with fresh agent as defined in claim 8.

12. A method according to claim 8, characterized in that the flue gas which is treated has a temperature below 350°C.

Patentansprüche

1. Verfahren zur Herstellung eines neutralisierenden Mittels für saure Rauchgas-Komponenten, welches Mittel hauptsächlich aus gelöschtem Kalk oder gelöschtem dolomitischem Kalk besteht, dadurch gekennzeichnet, dass gebrannter Kalk oder gebrannter dolomitischer Kalk auf an sich bekannte Weise mit einem Überschluss an Wasser gelöscht wird zwecks Erstellung einer Suspension von Partikeln gelöschten Kalks in Wasser, welche Suspension dann zu einem in einem Gasstrom dispergierbaren Pulver mit einem Feuchtigkeitsgehalt zwischen 0 und 50 Gew.-% getrocknet wird.

2. Verfahren nach Anspruch 1, dadurch gekennzeichnet, dass das Löschen mit einem Gewichtsverhältnis zwischen gebranntem Kalk und Wasser erfolgt, das zwischen 1:2 und 1:5 liegt.

3. Verfahren nach Anspruch 1, dadurch gekennzeichnet, dass das Löschen bei einer Temperatur zwischen 80 und 97°C erfolgt.

4. Verfahren nach Anspruch 2, dadurch gekennzeichnet, dass die durch das Löschen erstellte Suspension durch ein Sieb oder eine Vermahlungsvorrichtung geschickt wird, um grobe Partikeln zu entfernen.

5. Verfahren nach Anspruch 1, dadurch gekennzeichnet, dass die Trocknung als eine Zerstäubungsstrocknung ausgeführt wird.

6. Verfahren nach Anspruch 5, dadurch gekennzeichnet, dass als Trockengas bei der Zerstäubungsstrocknung die Abgase eines Kalkstein-Brennofens Anwendung finden.

7. Verfahren nach Anspruch 1, dadurch gekennzeichnet, dass als Ausgangsmaterial Kalk Anwendung findet, der in einer fluidisierten Schicht gebrannt worden ist.

8. Verfahren zur Neutralisation saurer Rauchgas-Komponenten, dadurch gekennzeichnet, dass ein nach einem der Ansprüche 1 bis 7 hergestelltes Mittel, welches in einer separaten Stufe hergestellt worden ist, im Gas dispergiert und anschliessend wieder aus diesem abgeschieden wird.

9. Verfahren nach Anspruch 8, dadurch gekennzeichnet, dass das Mittel in einen Rauchgasstrom eingeblasen wird, der dann in einen Reaktor mit turbulenten Strömungsverhältnissen eingeleitet wird, der so bemessen ist, dass eine durchschnittliche Aufenthaltszeit für das Rauchgas und das Mittel von 1—10 Sekunden erreicht wird, aus welchem Reaktor das gereinigte Gas und das Mittel, das sich mit den sauren Komponenten umgesetzt hat, abgeleitet werden, woraufhin das Rauchgas und von diesem mitgerissene Partikeln des umgesetzten Mittels zu einem Abscheider gelangen, in dem die mitgerissenen Partikeln aufgefangen werden und von dem aus das im wesentlichen neutralisierte Rauchgas zu einem Schornstein geleitet wird.

10. Verfahren nach Anspruch 9, dadurch gekennzeichnet, dass als Abscheider ein Schlauchfilter Anwendung findet.

11. Verfahren nach Anspruch 9, dadurch gekennzeichnet, dass ein Teil der im Abscheider aufgefangenen Partikeln zusammen mit frischem Mittel nach Anspruch 8 wieder in einem Rauchgasstrom dispergiert wird.

12. Verfahren nach Anspruch 8, dadruch gekennzeichnet, dass das Rauchgas, das behandelt wird, eine Temperatur vòn weniger als 350°C hat.

**Revendications**

1. Procédé de préparation d'un agent de neutralisation des composantes acides de gaz de fumée, ledit agent étant essentiellement constitué de chaux hydratée ou de chaux dolomitique hydratée, caractérisé en ce que de la chaux vive ou de la chaux dolomitique vive de manière en soi connue est détrempée sous excès d'eau pour produire une suspension aqueuse de particules de chaux hydratée, ladite suspension étant séchée en poudre qui peut être dispersée dans un courant de gaz et qui présente un taux d'humidité entre 0 et 50% en poids.

2. Procédé selon la revendication 1, caractérisé en ce que le détrempage est effectué avec un rapport pondéral entre chaux vive et eau situé entre 1:2 et 1:5.

3. Procédé selon la revendication 1, caractérisé en ce que le détrempage est effectué à une température située entre 80 et 97°C.

4. Procédé selon la revendication 2, caractérisé en ce que la suspension obtenue par le détrempage est passée à travers un tamis ou un broyeur pour éliminer les particules grossières.

5. Procédé selon la revendication 1, caractérisé en ce que le séchage est effectué sous forme d'un séchage par pulvérisation.

6. Procédé selon la revendication 5, caractérisé en ce que les gaz d'échappement d'un four de calcination de pierre à chaux sont utilisés comme gaz de séchage dans le séchage par pulvérisation.

7. Procédé selon la revendication 1, caractérisé en ce que l'on utilise de la chaux vive calcinée sous lit fluidifié comme matériau de départ.

8. Méthode de neutralisation des composantes acides de gaz de fumée, caractérisée en ce qu'un agent préparé par le procédé selon l'une quelconque des revendications 1 à 7 et produit dans une étape séparée est dispersé dans le gaz et séparé ensuite de ce gaz.

9. Méthode selon la revendication 8, caractérisée en ce que l'agent est injectée dans un courant de gaz de fumée qui est ensuite amené à un réacteur à écoulement turbulent dimensioné de manière à obtenir un temps de séjour du gaz de fumée et de l'agent de 1 à 10 secondes, le gaz nettoyé et l'agent ayant réagi avec les composantes acides étant extraits dudit réacteur, après quoi le gaz de fumée et les particules entraînées d'agent ayant réagi sont amenés à un ensemble collecteur où lesdites particules sont retenues et d'où le gaz de fumée essentiellement neutralisé est conduit à une cheminée.

10. Méthode selon la revendication 9, caractérisée en ce que l'on utilise un sac filtrant comme ensemble collecteur.

11. Méthode selon la revendication 9, caractérisée en ce qu'une partie des particules retenues dans l'ensemble collecteur est redispersée dans un courant de gaz de fumée avec un agent frais tel que défini dans la revendication 8.

12. Méthode selon la revendication 8, caractérisée en ce que le gaz de fumée traité présente une température inférieure à 350°C.

FIG.1

*FIG.2*